# EUROPÄISCHE PATENTSCHRIFT

(11) **EP 0 807 842 B1**
(45) Veröffentlichungstag und Bekanntmachung des Hinweises auf die Patenterteilung: **17.09.2003**
(21) Anmeldenummer: 97107821.7
(22) Anmeldetag: 13.05.1997
(51) Int. Cl.: G02B 27/42, G02B 3/08, G02B 5/18, G01V 8/12

(54) **Optische Anordnung mit diffraktivem optischen Element**
Optical arrangement with diffractive optical element
Dispositif optique avec élément optique diffractif

(30) Priorität: 14.05.1996 DE 19619478
(43) Veröffentlichungstag der Anmeldung: 19.11.1997
(73) Patentinhaber: Sick AG, 79183 Waldkirch, Breisgau (DE)
(72) Erfinder: Fetzer, Günter, 79194 Gundelfingen (DE); Alt, Gerjard, 79350 Sexau (DE)
(74) Vertreter: Finsterwald, Martin, Dr.

(56) Entgegenhaltungen:
- EP-A- 0 659 531
- EP-A- 0 698 804
- WO-A-93/21548
- DE-A- 4 304 343
- JP-A- 6 317 764
- US-A- 3 213 753
- US-A- 4 990 768
- US-A- 5 223 978
- US-A- 5 410 563
- PATENT ABSTRACTS OF JAPAN vol. 011, no. 015 (P-536), 16.Januar 1987 & JP 61 189504 A (MATSUSHITA ELECTRIC IND CO LTD), 23.August 1986,
- PATENT ABSTRACTS OF JAPAN vol. 008, no. 159 (P-289), 24.Juli 1984 & JP 59 057205 A (FUJITSU KK), 2.April 1984,
- PATENT ABSTRACTS OF JAPAN vol. 016, no. 100 (P-1323), 11.März 1992 & JP 03 278002 A (OMRON CORP), 9.Dezember 1991,
- PATENT ABSTRACTS OF JAPAN vol. 010, no. 135 (P-457), 20.Mai 1986 & JP 60 257420 A (MATSUSHITA DENKI SANGYO KK), 19.Dezember 1985,

## Beschreibung

Die Erfindung betrifft eine optoelektronische Sensorvorrichtung mit einer Sende- und Empfangsoptik und eine Lichtgittervorrichtung mit einer Sende- und Empfangsoptik.

Bei bekannten optischen Anordnungen, die beispielsweise in optoelektronischen Sensoren verwendet werden, müssen oftmals mehrere optische Funktionen gleichzeitig realisiert werden. So ist es beispielsweise bei Lichtschranken, die mit polarisiertem Licht arbeiten, nötig, zusätzlich zu der jeweils abbildenden Funktion der Sende- und Empfangsoptik jeweils einen Polfilter vorzusehen, wobei die Polfilter von Sende- und Empfangsoptik senkrecht zueinander orientiert sind. Eine derartige Konstruktion erfordert sowohl in der Sende- als auch in der Empfangsoptik jeweils zwei optische Elemente, nämlich zum einen die Abbildungsoptik und zum anderen den erwähnten Polfilter.

Nachteilig bei diesen optischen Anordnungen ist folglich, dass bei der Realisierung unterschiedlicher optischer Funktionen auch mehrere Bauteile verwendet werden müssen, was zum einen mit erheblichen Kosten und zum anderen mit einem vergleichsweise großen Platzbedarf verbunden ist.

US 4,990,768 offenbart einen photoelektrischen Schalter, der eine Sendeund Empfangsoptik mit Fresnel-Linsen und einen Polarisationsfilter enthält.

PATENT ABSTRACTS OF JAPAN vol. 011, no. 015 (P-536), 16. Januar 1987 & JP 61 189504 A beschreiben eine Fresnel-Linse und einen Polfilter integriert als ein Bauteil ausgebildet.

Eine Aufgabe der Erfindung besteht darin, eine optische Anordnung der eingangs genannten Art zu schaffen, welche wirtschaftlich herstellbar und auf kleinstem Raum unterbringbar ist.

Die Lösung dieser Aufgabe erfolgt durch die Merkmale der unabhängigen Ansprüche 1 oder 2.

Diese Aufgabe wird insbesondere dadurch gelöst, dass in einer optoelektronischen Sensorvorrichtung mit einer Sende- und einer Empfangsoptik sowohl die Sende- als auch die Empfangsoptik aus einer Polfilterfolie bestehen, in der die jeweils erforderlichen abbildenden Eigenschaften der Sende- bzw. Empfangsoptik in Form jeweils eines diffraktiven optischen Elements realisiert sind, wobei die Polfilterfolien der Sende- und Empfangsoptik senkrecht zueinander polarisiert sind. Ein derart ausgebildeter optoelektronischer Sensor zeichnet sich durch geringe Herstellungskosten, geringe Baugröße, geringes Gewicht und durch eine erhebliche Reduzierung der erforderlichen Justierarbeiten aus.

Die Aufgabe wird ferner dadurch gelöst, dass in einer Lichtgittervorrichtung, die eine Mehrzahl von reihenförmig angeordneten Sensoren aufweist, wobei die Sensoren jeweils mit nebeneinander liegender Sende- und Empfangsoptik ausgestattet sind, zumindest ein Teil der Sende- und Empfangsoptiken für alle Sensoren in insgesamt zwei übereinander liegende, senkrecht zueinander polarisierte Polfilterfolienstreifen integriert wird. Dabei wird der erste Polfilterfolienstreifen in denjenigen Bereichen mit je einer Durchbrechung versehen, in denen in den gegenüberliegenden zweiten Polfilterfolienstreifen die diffraktiven Sendeoptiken eingebracht sind. Analog weist der zweite Polfilterfolienstreifen in denjenigen Bereichen je eine Durchbrechung auf, in denen der gegenüberliegende erste Polfilterfolienstreifen mit den diffraktiven Empfangsoptiken versehen ist.

Auf diese Weise lässt sich die gesamte Optik eines Lichtgitters dadurch herstellen, dass in zwei unterschiedlich orientierte Polfilterfolienstreifen Sende- und Empfangsoptiken beispielsweise eingeprägt werden, wobei nachfolgend beispielsweise mittels eines Stanzvorgangs die erwähnten Durchbrechungen erzeugbar sind. Wenn die beiden beispielsweise auf die genannte Art hergestellten Polfilterfolienstreifen übereinander gelegt werden, kann mit diesem Doppelfolienstreifen die Sende- und Empfangsoptik der gesamten Lichtgitteranordnung realisiert werden. Dies stellt im Gegensatz zu den bisher bekannten Anordnungen eine erhebliche Vereinfachung des Herstellungsprozesses bei gleichzeitig deutlich geringerem Platzbedarf dar.

In der erfindungsgemäßen Vorrichtung ist die Polfilterfolie ein transparentes Material, in dem ein integriertes diffraktives optisches Element vorgesehen ist, wobei durch die von dem transparenten Material und dem diffraktiven optischen Element gebildete Einheit zumindest zwei unterschiedliche optische Funktionen, nämlich Abbildungsfunktionen und Polarisation und optional Strahlteilung, Filterung, Phasenschiebung, Strahlformung, Strahlprofilgebung und/oder Subaperturgebung realisiert sind.

Es werden hier also in ein einziges optisches Element zwei oder mehr optische Funktionen gleichzeitig integriert, wodurch sich die Anzahl der benötigten Bauteile und somit auch die mit dem Herstellungsprozess verbundenen Kosten reduzieren lassen. Gleichzeitig wird das Ziel des verringerten Platzbedarfs erreicht.

Neben den erwähnten Vorteilen lässt sich mit der Erfindung zudem erreichen,
- dass die Sende- und Empfangsoptik letztendlich ein geringeres Gewicht besitzt,
- dass die die Sende- und Empfangsoptik bildenden Bauelemente nicht mehr in aufwendiger Weise zueinander justiert werden müssen, da sie in einem einzigen optischen Element integriert sind und somit bereits beim Herstellungsprozess unverrückbar zueinander positioniert werden, und
- dass separate Halterungen für die einzelnen optischen Elemente entfallen, da in der Regel nur noch ein einziges optisches Element, nämlich das erfindungsgemäß mehrere optische Funktionen gleichzeitig realisierende Element gehalten werden muss.

Erfindungsgemäss wird bei der von dem transparenten Material und dem diffraktiven optischen Element gebildeten Einheit durch das transparente Material zumindest eine erste optische Funktion realisiert und durch das diffraktive optische Element zumindest eine zweite optische Funktion realisiert. Das transparente Material ist dabei als Polfilter (linear) ausgebildet und das diffraktive optische Element kann als Fresnel-Linse ausgebildet sein.

Vorzugsweise wird im Rahmen der Erfindung ein zumindest teilweise aus Kunststoff, Celluloseacetobutyrat, Acrylglas, PMMA und/oder Polycarbonat bestehendes transparentes Material verwendet. Dabei wird dieses transparente Material als Folie ausgebildet, da diese kostengünstig herstellbar ist und nur einen äußerst geringen Platz beansprucht.

Bei einer Reihe von Anwendungsfällen kann das transparente Material schichtweise aufgebaut sein.

Das diffraktive optische Element kann durch einen Heißprägeprozess in das transparente Material eingebracht oder durch Spritzgießen erzeugt werden. In diesem Fall erfüllt das diffraktive optische Element zumindest eine erste optische Funktion, während das transparente Material zumindest eine zweite optische Funktion erfüllen kann. Dabei ist das transparente Material als Polfilter und optional beispielsweise als Phasenschiebe- bzw. Verzögerungselement und/oder Spektralfilter ausgebildet.

Bei einem schichtweisen Aufbau des transparenten Materials mit einer Mittelschicht und zwei Trägerschichten können die Trägerschichten zusätzlich zu der optischen Funktion der Mittelschicht verschiedene weitere optische Funktionen realisieren. Denkbar ist hier eine spektrale Befilterung, die beispielsweise durch eine eingefärbte Trägerschicht erreicht werden kann. Weiterhin kann die Trägerschicht auch durch eine herkömmliche Linse gebildet sein, deren Planseite der Mittelschicht zugewandt ist, wobei die diffraktive Struktur in diese Linse einprägbar ist. Schließlich kann durch die Trägerschicht auch ein optischer Abschluss realisiert werden. Vorstehende Funktionen sind lediglich beispielhaft aufgezählt, es lassen sich eine Vielzahl von weiteren Funktionen denken.

Das diffraktive optische Element kann zumindest eine weitere optische Funktion erfüllen, wobei hier Abbildungsfunktionen und optional Strahlteilerfunktionen, Strahlformungsfunktionen oder Strahlprofilgebungsfunktionen ausgebildet sind. Zu den genannten Zwecken kann das diffraktive optische Element als geeignete beugende und/oder brechende Struktur und ggf. als Fresnel-Linse ausgebildet werden.

Eine bevorzugte Anwendungsform der Erfindung bei Lichtschranken besteht darin, die erforderlichen optischen Funktionen dadurch zu realisieren, dass das transparente Material als Polfilter ausgebildet ist, in welches eine die Abbildungsfunktion übernehmende Fresnel-Linse integriert ist. Die optische Funktion einer solchen Fresnel-Linse basiert auf dem Prinzip der Lichtbeugung bzw. einer geeigneten Gewichtung von Lichtbeugung und Lichtbrechung.

Bei nicht beanspruchten Autokollimationslichtschranken kann durch geeignete Strukturgebung das diffraktive optische Element derart gestaltet werden, dass durch entsprechende Lichtverteilung in den Beugungsordnungen auch eine strahlteilende Wirkung erzeugt wird, wodurch sich speziell bei diesem Anwendungsfall eine besonders platzsparende und kostengünstige Anordnung ergibt.

Das diffraktive optische Element wird üblicherweise als Mikrostruktur ausgebildet, wobei die Größe des Strukturelement-Abstandes im Bereich der Lichtwellenlänge liegt oder auch etwas mehr als die Lichtwellenlänge betragen kann. Beim Einsatz einer derartigen Mikrostruktur findet sowohl Brechung als auch Beugung statt. Bei Realisierung der Mikrostrukturen als Gitterstrukturen in Form eines Oberflächenreliefs lassen sich sehr komplizierte optische Funktionen verwirklichen. Vorteilhaft ist dabei insbesondere, dass optische Bauelemente mit sehr kleinen Abmessungen gefertigt werden können.

Bei modernen optoelektronischen Geräten kann es von Vorteil sein, die erfindungsgemäße Sende- und Empfangsoptik benachbart zu oder auf einem Sendechip oder einer LED/Photodiode anzuordnen. Insbesondere kann die erfindungsgemäße Sende- und Empfangsoptik in den lichtemittierenden bzw. lichtdurchlässigen Bereich einer LED/Photodiode integriert werden. Auf diese Weise können die erforderlichen optischen Funktionen bereits bei der Herstellung der LED/Photodiode bzw. des Sendechips realisiert werden, was zum einen kostengünstig und platzsparend ist und zum anderen jegliche Justierungsarbeiten überflüssig macht, da hier nicht nur die optischen Elemente zueinander bereits justiert sind sondern auch eine Justierung zwischen Lichtquelle und optischen Elementen bereits bei der Herstellung erfolgt. Vorteilhaft ist in diesem Fall ferner, dass die erfolgt Justierung unveränderlich ist, so dass ein Nachjustieren zu einem späteren Zeitpunkt überflüssig wird.

Die erfindungsgemäße Anordnung lässt sich vielfältig verwenden, insbesondere ist sie in optischen Systemen mit Pupillenteilung einsetzbar.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnungen beschrieben; in diesen zeigen:
- Fig. 1: ein Prinzipschaubild einer erfindungsgemäß ausgestalteten Lichtschranke mit Pupillenteilung,
- Fig. 2: eine nicht beanspruchte und auf dem Autokollimationsprinzip basierende Lichtschranke,
- Fig. 3: einen Querschnitt durch eine erfindungsgemäße optische Anordnung,
- Fig. 4: ein Prinzipschaubild einer erfindungsgemäßen optischen Anordnung zur Verwendung bei Lichtgittern, und
- Fig. 5: eine Schnittansicht einer nicht beanspruchten schichtweise aufgebauten optischen Anordnung.

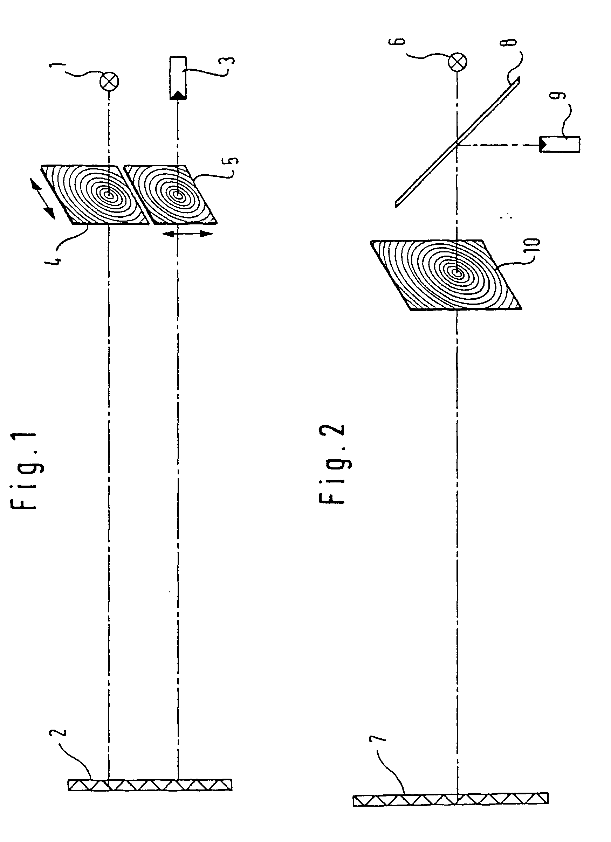

Die in Fig. 1 dargestellte Lichtschranke besteht aus einem Lichtsender 1, welcher Licht in Richtung eines Reflektors 2 abstrahlt, wobei der Reflektor 2 das vom Lichtsender 1 abgestrahlte Licht zu einem benachbart zum Lichtsender 1 angeordneten Lichtempfänger 3 zurückreflektiert.

Das vom Lichtsender 1 ausgesandte Licht tritt durch eine in Pfeilrichtung polarisierte Linearpolfilterfolie 4, in welche eine als Fresnel-Linse ausgebildete diffraktive optische Struktur eingeprägt ist. Die Linearpolfilterfolie 4 übernimmt somit sowohl die Funktion des Polarisierens des vom Lichtsender 1 ausgesandten Lichts als auch die beim Aussenden des Lichts erforderlichen Abbildungsfunktionen.

In analoger Weise ist vor den Lichtempfänger 3 eine weitere polarisierte Linearpolfilterfolie 5 geschaltet, wobei deren Polarisationsrichtung entsprechend dem dargestellten Pfeil senkrecht zur Polarisationsrichtung der Linearpolfilterfolie 4 verläuft. In die dem Lichtempfänger 3 vorgeordnete Linearpolfilterfolie 5 ist ebenfalls eine als Fresnel-Linse ausgebildete diffraktive optische Struktur eingearbeitet, welches die beim Empfang des reflektierten Lichtes erforderlichen Abbildungsfunktionen übernimmt.

Durch die in Fig. 1 dargestellte Lichtschranke ist somit eine kostengünstig herzustellende und wenig Platz beanspruchende Vorrichtung geschaffen, bei der die gesamten erforderlichen optischen Funktionen von den beiden Folienelementen 4, 5 übernommen werden.

Fig. 2 zeigt eine nicht beanspruchte Autokollimationslichtschranke mit einem Sender 6, welcher Licht in Richtung eines Reflektors 7 abstrahlt, der das Licht entlang dem Sendelichtweg zurückreflektiert, wobei das zurückreflektierte Licht auf einen Strahlteiler 8 trifft, der das empfangene Licht in Richtung eines Lichtempfängers 9 umlenkt.

Der mit der dargestellten Autokollimationslichtschranke zu überwachende Bereich ist auf der einen Seite durch den Reflektor 7 und auf der anderen Seite durch eine Zirkularpolfilterfolie 10 begrenzt.

In die Zirkularpolfilterfolie 10 ist eine diffraktive Struktur eingearbeitet, die beispielsweise als Fresnel-Linse ausgebildet sein kann.

Die Zirkularpolfilterfolie 10 übernimmt dabei sowohl die Funktion des Polarisierens des ausgesandten als auch des empfangenen Lichts. Zusätzlich erfüllt die Zirkularpolfilterfolie 10 die beim Aussenden und beim Empfang des Lichtes erforderlichen Abbildungsfunktionen.

Es läßt sich auf diese Weise eine äußerst platzsparende und kostengünstige Anordnung schaffen, in der mehrere optische Funktionen in einem einzigen Folienelement 10 integriert sind.

Bei einer vorteilhaften, in den Figuren nicht dargestellten und nicht beanspruchten Autokollimationslichtschranke kann durch geeignete Strukturgebung das diffraktive optische Element derart gestaltet werden, daß durch entsprechende Lichtverteilung in den Beugungsordnungen zudem auch noch eine strahlteilende Wirkung erzielt wird, wodurch sich eine weitere Reduzierung der Anzahl der erforderlichen Bauteile erreichen läßt.

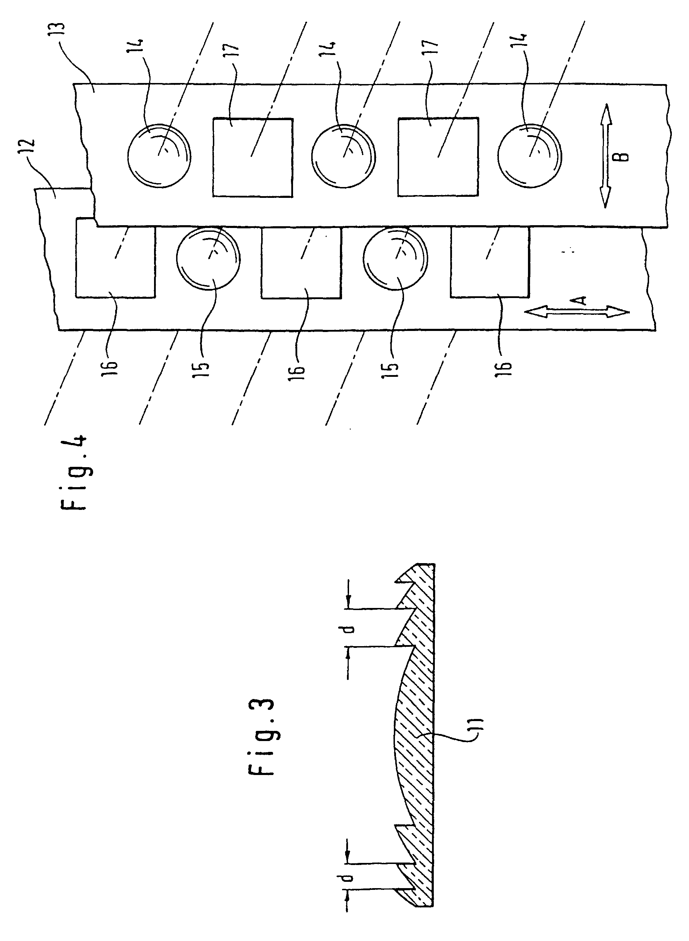

Fig. 3 zeigt einen stark vergrößerten Querschnitt durch eine erfindungsgemäß bearbeitete Polfilterfolie, wie sie beispielsweise im Rahmen einer Lichtschranke gemäß Fig. 1 verwendbar ist.

Die Strukturelement-Abstände d der Polfilterfolie 11 sind bei dem in Fig. 3 dargestellten Ausführungsbeispiel so gewählt, daß sich letztendlich eine typische Fresnel-Struktur ergibt.

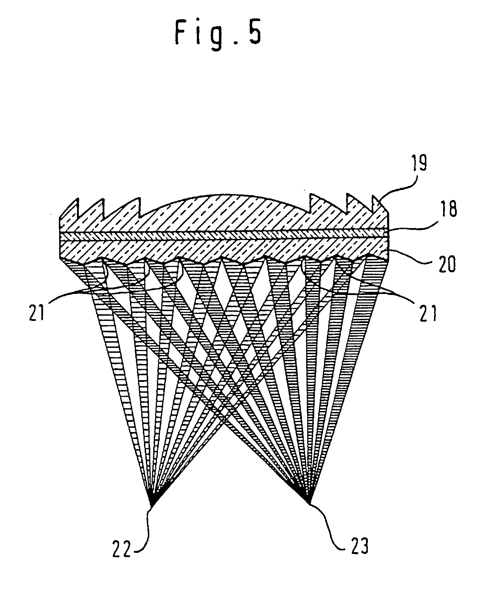

Fig. 4 zeigt zwei Polfilterfolienstreifen 12, 13, die - sofern sie korrekt zueinander ausgerichtet übereinandergelegt werden - als Sende- und Empfangsoptik einer Lichtgitteranordnung verwendbar sind.

Der Polfilterfolienstreifen 12 ist in Richtung des Pfeiles A polarisiert, während die Polarisationsrichtung des Polfilterfolienstreifens 13 senkrecht hierzu in Richtung des Pfeiles B verläuft. Die Polarisationsrichtung B des Polfilterfolienstreifens 13 entspricht dabei der Polarisationsrichtung des ausgesandten und die Polarisationsrichtung A des Polfilterfolienstreifens 12 der Polarisationsrichtung des empfangenen Lichts.

In den Polfilterfolienstreifen 13 sind in äquidistanten Abständen diffraktive optische Elemente 14 eingearbeitet bzw. eingeprägt, die die Abbildungsfunktion der Sendeoptik übernehmen. Dabei ist jedes diffraktive optische Element 14 genau einem Senderelement des Lichtgitters zugeordnet.

In entsprechender Weise ist der Polfilterfolienstreifen 12 mit diffraktiven optischen Elementen 15 versehen, die die Abbildungsfunktion der Empfangsoptik übernehmen. Auch hierbei ist jeweils ein diffraktives optisches Element 15 jeweils einem Empfangselement des Lichtgitters zugeordnet.

Wenn nun beide Polfilterfolienstreifen 12, 13 deckungsgleich übereinandergelegt werden, müssen sie zunächst so ausgerichtet werden, daß sich die diffraktiven optischen Sendeelemente 14 mit den diffraktiven optischen Empfangselementen 15 abwechseln, wobei sich die Elemente 14 und 15 nicht überlappen dürfen.

Um die bei einem Lichtgitter gewünschten Funktionen realisieren zu können, muß gewährleistet sein, daß beispielsweise ein Sendelichtstrahl durch ein diffraktives optisches Sendeelement 14 abgebildet und in Richtung des Pfeiles B polarisiert wird, wobei die beiden genannten Funktionen von dem Polfilterfolienstreifen 13 übernommen werden. Im Bereich eines ausgesandten und durch ein diffraktives optisches Element 14 tretenden Lichtstrahls darf somit der Polfilterfolienstreifen 12 keinerlei Auswirkung auf den Lichtstrahl haben, weshalb dieser Polfilterfolienstreifen 12 in den entsprechenden Bereichen mit Durchbrechungen 16 versehen ist. Bei übereinanderliegenden Polfilterfolienstreifen 12, 13 ist somit im Polfilterfolienstreifen 12 in denjenigen Bereichen jeweils eine Durchbrechung 16 vorgesehen, die den diffraktiven optischen Sendeelementen 14 gegenüberliegen.

Da bei den empfangenen Lichtstrahlen entsprechendes gewährleistet sein muß, ist auch der Polfilterfolienstreifen 13 mit Durchbrechungen 17 versehen, welche nun wiederum denjenigen Bereichen des Polfilterfolienstreifens 12 gegenüberliegen, in denen die diffraktiven optischen Empfangselemente 15 vorgesehen sind.

In beiden Polfilterfolienstreifen 12, 13 sind somit jeweils diffraktive Elemente 14, 15 und Durchbrechungen 16, 17 alternierend in einer Reihe angeordnet. Dabei kann die flächige Erstreckung jeder Durchbrechung 16, 17 in einem Polfilterfolienstreifen 12, 13 größer sein als die flächige Erstreckung des der jeweiligen Durchbrechung 16, 17 zugeordneten diffraktiven Elements 14, 15 des anderen Polfilterfolienstreifens 13, 12. Bevorzugt ist es, wenn die flächige Erstreckung jeder Durchbrechung 16, 17 in einem Polfilterfolienstreifen 12, 13 ungefähr genauso groß oder nur geringfügig größer ist wie bzw. als die flächige Erstreckung des der jeweiligen Durchbrechung 16, 17 zugeordneten diffraktiven Elements 14, 15 des anderen Polfilterfolienstreifens 13, 12. In diesem Fall wird durch die gekreuzten Polfilterfolienstreifen 12, 13 eine wirksame Fremdlichtfilterung erreicht.

Auf diese Weise kann durch zwei übereinandergelegte Polfilterfolienstreifen 12, 13 die gesamte Sende- und Empfangsoptik eines Lichtgitters realisiert werden.

Fig. 5 zeigt eine Schnittansicht einer nicht beanspruchten erfindungsgemäßen optischen Anordnung, welche schichtweise aufgebaut ist.

Die Anordnung besteht insbesondere aus drei übereinanderliegenden Schichten, wobei die Mittelschicht 18 von einer Polfilter- oder Verzögerungsfolie gebildet ist, die zwischen zwei Trägerschichten 19, 20 eingebettet ist. Die Trägerschichten 19, 20 weisen dabei jeweils eine Planseite auf, die jeweils der Mittelschicht 18 zugewandt ist. Beide Trägerschichten 19, 20 sind transparent ausgebildet.

Die obere Trägerschicht 19 ist mit einer typischen Fresnel-Struktur versehen, wie sie auch in Fig. 3 dargestellt ist.

Die untere Trägerschicht 20 ist an ihrer Unterseite derart bearbeitet, daß mehrere aneinander angrenzende giebelförmige Nuten 21 ausgebildet sind, welche letztendlich zu einer strahlteilenden Wirkung führen, was durch die beiden in Fig. 5 in unterschiedlichen Graustufen dargestellte Lichtbündel veranschaulicht ist, die jeweils auf unterschiedliche Fokuspunkte 22, 23 fokussiert werden.

Eine zusätzliche optische Funktion der in Fig. 5 dargestellten Anordnung kann beispielsweise dadurch realisiert werden, daß die untere Trägerschicht 20 rot eingefärbt wird, so daß ein farbiges optisches Kantenfilter entsteht.

Die Erfindung ist nicht auf die vorstehend beschriebenen Anwendungsfälle und Ausführungsbeispiele beschränkt, es lassen sich eine Vielzahl von anderen Anwendungsfällen und Ausführungsbeispielen denken.

### Bezugszeichenliste

- 1: Lichtsender
- 2: Reflektor
- 3: Lichtempfänger
- 4: Folie
- 5: Folie
- 6: Lichtsender
- 7: Reflektor
- 8: Strahlteiler
- 9: Lichtempfänger
- 10: Folie
- 11: Polfilterfolie
- 12: Polfilterfolienstreifen
- 13: Polfilterfolienstreifen
- 14: diffraktive optische Elemente
- 15: diffraktive optische Elemente
- 16: Aussparungen
- 17: Aussparungen
- 18: Mittelschicht
- 19: Trägerschicht
- 20: Trägerschicht
- 21: Nuten
- 22: Fokuspunkt
- 23: Fokuspunkt

## Patentansprüche

1. Optoelektronische Sensorvorrichtung mit einer Sende- und Empfangsoptik, die zumindest ein in transparentes Material (4, 5, 10, 11, 12, 13) integriertes diffraktives optisches Element (4, 5, 10, 11, 14, 15) aufweist,
**dadurch gekennzeichnet,**
**dass** durch die von dem transparenten Material (4, 5, 10, 11, 12, 13) und dem diffraktiven optischen Element (4, 5, 10, 11, 14, 15) gebildete Einheit zumindest zwei unterschiedliche optische Funktionen nämlich Abbildungsfunktionen und Polarisation realisiert sind, und sowohl Sende- als auch Empfangsoptik aus einer das transparente Material bildenden Polfilterfolie (4, 5, 10, 12, 13) bestehen, in der die jeweils erforderlichen abbildenden Eigenschaften der Sende- bzw. Empfangsoptik in Form jeweils eines der diffraktiven optischen Elemente (4, 5, 10, 11, 14, 15) realisiert sind, wobei die Polfilterfolien (4, 5, 10, 12, 13) der Sende- und Empfangsoptik senkrecht zueinander polarisiert sind.

2. Lichtgittervorrichtung mit einer Sende- und Empfangsoptik, die zumindest ein in transparentes Material (4, 5, 10, 11, 12, 13) integriertes diffraktives optisches Element (4, 5, 10, 11, 14, 15) aufweist, wobei durch die von dem transparenten Material (4, 5, 10, 11, 12, 13) und dem diffraktiven optischen Element (4, 5, 10, 11, 14, 15) gebildete Einheit zumindest zwei unterschiedliche optische Funktionen, nämlich Abbildungsfunktionen und Polarisation realisiert sind, und bei der eine Mehrzahl von Sensoren reihenförmig mit jeweils nebeneinander liegender Sende- und Empfangsoptik angeordnet sind,
wobei zumindest ein Teil der Sende- und Empfangsoptiken für alle Sensoren in insgesamt zwei übereinander liegende, senkrecht zueinander polarisierte, das transparente Material bildende Polfilterfolienstreifen (12, 13) integriert ist, wobei der erste Polfilterfolienstreifen (12) in denjenigen Bereichen je eine Durchbrechung (16) aufweist, in denen in den zweiten Polfilterfolienstreifen die diffraktiven Sendeoptiken (14) eingebracht sind, und wobei der zweite Polfilterfolienstreifen (13) in denjenigen Bereichen je eine Durchbrechung (17) aufweist, in denen in den ersten Polfilterfolienstreifen (12) die diffraktiven Empfangsoptiken (15) eingebracht sind.

3. Lichtgittervorrichtung nach Anspruch 2,
**dadurch gekennzeichnet,**
**dass** in den Polfilterfolienstreifen (12,13) jeweils die diffraktiven Elemente (14, 15) und die Durchbrechungen (16, 17) in einer Reihe alternierend angeordnet sind.

4. Lichtgittervorrichtung nach Anspruch 2 oder 3,
**dadurch gekennzeichnet,**
**dass** die flächige Erstreckung jeder Durchbrechung (16, 17) in einem Polfilterfolienstreifen (12, 13) an die Größe der flächigen Erstreckung des der jeweiligen Durchbrechung (17, 16) zugeordneten diffraktiven Elements (14, 15) des anderen Polfilterfolienstreifens (13, 12) angepasst und insbesondere im Wesentlichen gleich groß ist.

5. Vorrichtung nach einem der vorhergehenden Ansprüche,
**dadurch gekennzeichnet,**
**dass** das transparente Material (4, 5, 10, 11, 12, 13) schichtweise aufgebaut ist und/oder zumindest teilweise aus Kunststoff, Celluloseacetobutyrat, Acrylglas, PMMA und/oder Polycarbonat besteht und als Folie ausgebildet ist, und/oder dass das diffraktive optische Element (4, 5, 10, 11, 14, 15) durch einen Heißprägeprozess in das transparente Material (4, 5, 10, 11, 12, 13) eingebracht oder durch Spritzgießen erzeugt ist.

6. Vorrichtung nach einem der vorhergehenden Ansprüche,
**dadurch gekennzeichnet,**
**dass** das transparente Material (4, 5, 10, 11, 12, 13) als Linearpolfilter und optional als Phasenschiebe- bzw. Verzögerungselement und/oder Spektralfilter ausgebildet ist, das vorzugsweise eine Fresnel-Linse aufweist, und/oder dass das diffraktive optische Element (4, 5, 10, 11, 14, 15) als Mikrostruktur mit einem Strukturelement-Abstand (d) in der Größe der Lichtwellenlänge ausgebildet ist.

7. Vorrichtung nach einem der vorhergehenden Ansprüche,
**dadurch gekennzeichnet,**
**dass** die Sende- und Empfangsoptik benachbart zu oder auf einem Sendechip oder einer LED/Photodiode angeordnet ist.

8. Verwendung einer Vorrichtung nach einem der Ansprüche 1 bis 8 in einem optischen System mit Pupillenteilung.

## Claims

1. Optoelectronic sensor apparatus comprising a transmitting optical system and/or a receiving optical system having at least one diffractive optical element (4, 5, 10, 11, 14, 15) integrated into transparent material (4, 5, 10, 11, 12, 13),
**characterized in that** at least two different optical functions, namely image forming functions and polarization, are realized by the unit formed by the transparent material (4, 5, 10, 11, 12, 13) and the diffractive optical element (4, 5, 10, 11, 14, 15), and both the transmitting and the receiving optical systems consist of a polarizing foil filter (4, 5, 10, 12, 13) which forms the transparent material and in which the respectively required image forming characteristics of the transmitting and/or receiving optical system are realized in the form of one of the respective diffractive optical elements (4, 5, 10, 11, 14, 15), with the polarizing foil filters (4, 5, 10, 12, 13) of the transmitting and receiving optical systems being polarized perpendicular to one another.

2. Light grid apparatus comprising a transmitting optical system and a receiving optical system which have at least one diffractive optical element (4, 5, 10, 11, 14, 15) integrated into transparent material (4, 5, 10, 11, 12, 13), wherein at least two different optical functions, namely image forming functions and polarization, are realized by the unit formed by the transparent material (4, 5, 10, 11, 12, 13) and the diffractive optical element (4, 5, 10, 11, 14, 15), and in which a plurality of sensors are arranged in series with respective transmitting and receiving optical systems arranged alongside one another, wherein at least some of the transmitting and receiving optical systems for all sensors are integrated into a total of two polarizing filter strips (12, 13) forming the transparent material which lie above one another and which are polarized perpendicular to one another, with the first polarizing foil filter strip (12) having a respective aperture (16) in each of those regions where the diffractive transmitting optical systems (14) are introduced into the second polarizing foil filter strip, and wherein the second polarizing foil filter strip (13) has a respective aperture (17) in those regions in which the diffractive receiving optical systems (15) are introduced into the first polarizing foil filter strip (12).

3. Light grid apparatus in accordance with claim 2, **characterized in that** the diffractive elements (14, 15) and the apertures (16, 17) are in each case arranged alternately in a row in the polarizing foil filter strips (12, 13).

4. Light grid apparatus in accordance with claim 2 or claim 3, **characterized in that** the areal extent of each aperture (16, 17) in a polarizing foil filter strip (12, 13) is matched to the size of the areal extent of the diffractive element (14, 15) of the other polarizing foil filter strip (13, 12) associated with the respective aperture (17, 16) and is approximately of the same size.

5. Apparatus in accordance with any one of the preceding claims,
**characterized in that** the transparent material (4, 5, 10, 11, 12, 13) is built up layer-wise and/or consists at least in part of plastic, cellulose acetate butyrate, acrylic glass, PMMA and/or polycarbonate and is preferably formed as a foil; and/or **in that** the diffractive optical element (4, 5, 10, 11, 14, 15) is introduced by a hot pressing process into the transparent material (4, 5, 10, 11, 12, 13) or is produced by injection molding.

6. Apparatus in accordance with any one of the previous claims, **characterized in that** the transparent material (4, 5, 10, 11, 12, 13) is formed as a linear polarizing filter and optionally as a phase shifting element or delay element and/or as a spectral filter, which preferably has a Fresnel lens; and/or **in that** the diffractive optical element (4, 5, 10, 11, 14, 15) is formed as a microstructure with a structure element spacing (d) of the order of magnitude of the wavelength of the light.

7. Apparatus in accordance with any one of the previous claims, **characterized in that** the transmitting and receiving optical system is arranged adjacent to or on a transmitting chip or adjacent to or on an LED/photodiode.

8. Use of an apparatus in accordance with any one of claims 1 to 8 in an optical system with pupil division.

## Revendications

1. Dispositif à capteur optoélectronique comprenant une optique d'émission et de réception, qui comporte au moins un élément optique diffractif (4, 5, 10, 11, 14, 15) intégré dans un matériau transparent (4, 5, 10, 11, 12, 13), **caractérisé en ce que** l'unité formée par le matériau transparent (4, 5, 10, 11, 12, 13) et l'élément optique diffractif (4, 5, 10, 11, 14, 15) réalise au moins deux fonctions optiques différentes, à savoir des fonctions de représentation et une polarisation, et **en ce qu'**aussi bien l'optique d'émission que l'optique de réception sont constituées par un film filtrant polaire (4, 5, 10, 12, 13) formant le matériau transparent, dans lequel sont réalisées les propriétés de représentation respectivement nécessaires de l'optique d'émission ou de réception sous la forme de l'un des éléments optiques diffractifs (4, 5, 10, 11, 14, 15) respectivement, les films filtrants polaires (4, 5, 10, 12, 13) de l'optique d'émission et de réception étant polarisés perpendiculairement les uns par rapport aux autres.

2. Dispositif à réseau optique comprenant une optique d'émission et de réception, qui comporte au moins un élément optique diffractif (4, 5, 10, 11, 14, 15) intégré dans un matériau transparent (4, 5, 10, 11, 12, 13), l'unité formée par le matériau transparent (4, 5, 10, 11, 12, 13) et l'élément optique diffractif (4, 5, 10, 11, 14, 15) réalisant au moins deux fonctions optiques différentes, à savoir des fonctions de représentation et une polarisation, et plusieurs capteurs étant disposés par rangées avec des optiques d'émission et de réception placées respectivement les unes à côté des autres, au moins une partie des optiques d'émission et de réception pour tous les capteurs étant intégrée dans au total deux bandes de film filtrant polaire (12, 13) superposées, polarisées verticalement l'une par rapport à l'autre et constituant le matériau transparent, la première bande de film filtrant polaire (12) comportant respectivement un passage (16) dans les zones dans lesquelles les optiques d'émission diffractives (14) sont insérées dans la deuxième bande de film filtrant polaire, et la deuxième bande de film filtrant polaire (13) comportant respectivement un passage (17) dans les zones dans lesquelles sont insérées les optiques de réception diffractives (15).

3. Dispositif à réseau optique selon la revendication 2, **caractérisé en ce que**, dans les bandes de film filtrant polaire (12, 13), les éléments diffractifs (14, 15) et les passages (16, 17) sont disposés respectivement en alternance sur une rangée.

4. Dispositif à réseau optique selon la revendication 2 ou 3, **caractérisé en ce que** l'étendue superficielle de chaque passage (16, 17) dans une bande de film filtrant polaire (12, 13) est adaptée aux dimensions de l'étendue superficielle de l'élément diffractif (14, 15) de l'autre bande de film filtrant polaire (13, 12) associé au passage (17, 16) respectif, et qu'elle présente pour l'essentiel les mêmes dimensions.

5. Dispositif selon l'une quelconque des revendications précédentes, **caractérisé en ce que** le matériau transparent (4, 5, 10, 11, 12, 13) présente une structure en couches et/ou est, au moins en partie, en matière plastique, en acétobutyrate de cellulose, en verre acrylique, en PMMA et/ou en polycarbonate, et il est agencé sous la forme d'un film, et/ou **en ce que** l'élément optique diffractif (4, 5, 10, 11, 14, 15) est inséré dans le matériau transparent (4, 5, 10, 11, 12, 13) à l'aide d'un procédé d'estampage à chaud ou réalisé par moulage par injection.

6. Dispositif selon l'une quelconque des revendications précédentes, **caractérisé en ce que** le matériau transparent (4, 5, 10, 11, 12, 13) agencé sous la forme d'un filtre polaire linéaire ou, éventuellement, d'un élément de déphasage ou de temporisation et/ou d'un filtre spectral, qui comporte de préférence une lentille de Fresnel, et/ou **en ce que** l'élément optique diffractif (4, 5, 10, 11, 14, 15) est agencé comme une microstructure avec une distance (d) des éléments de structure de l'ordre de la longueur des ondes lumineuses.

7. Dispositif selon l'une quelconque des revendications précédentes, **caractérisé en ce que** l'optique d'émission et de réception est disposée à proximité ou sur une puce d'émission ou d'une DEL/photodiode.

8. Utilisation d'un dispositif selon l'une quelconque des revendications 1 à 8 dans un système optique à séparation des pupilles.
